# EUROPEAN PATENT SPECIFICATION

(11) **EP 3 477 145 B1**
(45) Date of publication and mention of the grant of the patent: **21.04.2021**
(21) Application number: 17815388.8
(22) Date of filing: 20.06.2017
(51) Int. Cl.: F16F 9/34, F16F 9/44, F16F 9/342

(54) **SHOCK ABSORBER AND METHOD FOR MANUFACTURING THE SAME**
STOSSDÄMPFER UND VERFAHREN ZUR HERSTELLUNG DAVON
AMORTISSEUR ET SON PROCÉDÉ DE FABRICATION

(30) Priority: 24.06.2016 JP 2016125558
(43) Date of publication of application: 01.05.2019
(73) Proprietor: Hitachi Astemo, Ltd., Hitachinaka-shi, Ibaraki 312-8503 (JP)
(72) Inventor: AKIBA, Naoto, Hitachinaka-shi Ibaraki 312-8503 (JP); NAKAMURA, Ken, Hitachinaka-shi Ibaraki 312-8503 (JP)
(74) Representative: Hoffmann Eitle
(86) International application number: PCT/JP2017/022639
(87) International publication number: WO 2017/221920

(56) References cited:
- FR-A1- 2 775 041
- JP-A- 2000 291 715
- JP-A- 2007 071 233
- JP-A- 2010 209 960
- JP-A- 2011 185 389
- JP-A- 2011 185 389
- JP-U- S6 225 345
- NL-A- 6 400 574
- US-A- 2 035 954
- US-A- 5 301 776

## Description

### TECHNICAL FIELD

The present invention relates to a shock absorber mounted on, for example, a railway train, and preferably used to absorb a vibration of the railway train, and a method for manufacturing the shock absorber.

### BACKGROUND ART

Generally, railway trains are provided with shock absorbers using hydraulic fluid such as hydraulic oil between each bogie and a vehicle body of the railway train, and are configured to absorb a vibration of the railway train (for example, refer to JP 2014-62643 A). Such a shock absorber according to this kind of conventional technique includes a cylinder sealingly containing the hydraulic fluid, a piston inserted in the cylinder and dividing an inside of the cylinder into a rod-side fluid chamber and an opposite rod-side fluid chamber, a piston rod coupled with the piston and extending out of the cylinder, a flow passage configured in such a manner that a flow of the hydraulic fluid is generated due to extension and compression of the piston rod, and a valve mechanism provided in the flow passage and configured to generate a damping force.
US 5301776 A is related to a hydraulic adjustable vibration damper, in which an electromagnetically activated damping valve pressurizes a flow passage. A similar damper is shown in FR 2775041 A.

JP 2011 185389 A discloses a shock absorber according to the preamble of Claim 1.

### SUMMARY OF INVENTION

### TECHNICAL PROBLEM

Then, the shock absorber according to JP 2014-62643 A uses a poppet valve mechanism. A damping force generated by the poppet valve mechanism is adjusted by a valve-opening load on a valve body, i.e., a compression amount when a valve spring is installed (an installation compression load). However, the shock absorber according to JP 2014-62643 A is configured in such a manner that the valve body, the valve spring, a spring bearing, and the like are sequentially attached in a valve body chamber provided in the flow passage. This configuration fails to allow the valve spring (the compression amount) to be visually confirmed, thereby raising a possibility that the valve spring cannot be compressed by a constant amount and thus a variation occurs in the damping force.

An object of the present invention is to provide a shock absorber that allows a compression amount of an elastic member to be correctly adjusted when a valve mechanism is assembled, thereby allowing the valve mechanism to stabilize a damping force, and a method for manufacturing the shock absorber.

### SOLUTION TO PROBLEM

According to one aspect of the present invention, a shock absorber includes the features of claim 1 and in particular a cylinder sealingly containing hydraulic fluid therein, a piston inserted in the cylinder and dividing an inside of the cylinder into a rod-side fluid chamber and an opposite rod-side fluid chamber, a piston rod coupled with the piston and extending out of the cylinder, a flow passage configured in such a manner that a flow of the hydraulic fluid is generated due to extension and compression of the piston rod, and a valve mechanism provided in the flow passage and configured to generate a damping force. The valve mechanism includes an annular valve seat member fixably provided by being inserted at an intermediate position of the flow passage. The valve seat member has one end side serving as a valve seat. The valve seat member includes a through-hole at a central portion thereof. The valve mechanism further includes a valve pin including a large-diameter portion and a small-diameter portion. The large-diameter portion forms a valve body by abutting against the valve seat. The small-diameter portion has one side connected to this large-diameter portion and the other side inserted on an inner peripheral side of the valve seat member. The valve mechanism further includes a passage formed between the through-hole of the valve seat member and an outer periphery of the valve pin and configured to be opened/closed according to a movement of the valve pin, a nut threadably engaged with an outer periphery of the other side of the small-diameter portion of the valve pin, and an elastic member disposed between the other end side of the valve seat member and the nut. The flow passage is provided at the piston, and at least part of the nut is disposed in the flow passage.

Further, according to one aspect of the present invention, a method for manufacturing a shock absorber in accordance with claim 6 is provided. The shock absorber includes a cylinder sealingly containing hydraulic fluid therein, a piston inserted in the cylinder and dividing an inside of the cylinder into a rod-side fluid chamber and an opposite rod-side fluid chamber, a piston rod coupled with the piston and extending out of the cylinder, a flow passage configured in such a manner that a flow of the hydraulic fluid is generated due to extension and compression of the piston rod, and a valve mechanism provided in the flow passage and configured to generate a damping force.

The valve mechanism includes an annular valve seat member fixably provided by being inserted at an intermediate position of the flow passage. The valve seat member has one end side serving as a valve seat. The valve seat member includes a through-hole at a central portion thereof. The valve mechanism further includes a valve pin including a large-diameter portion and a small-diameter portion. The large-diameter portion forms a valve body by abutting against the valve seat. The small-diameter portion has one side connected to this large-diameter portion and the other side inserted on an inner peripheral side of the valve seat member. The valve mechanism further includes a passage formed between the through-hole of the valve seat member and an outer periphery of the valve pin and configured to be opened/closed according to a movement of the valve pin, a nut threadably engaged with an outer periphery of the other side of the small-diameter portion of the valve pin, and an elastic member disposed between the other end side of the valve seat member and the nut. The flow passage is provided at the piston, and at least part of the nut is disposed in the flow passage.

The method for manufacturing the shock absorber includes assembling the valve mechanism as a valve block, and adjusting an installment length dimension of the elastic member after the valve block is assembled.

According to the one aspect of the present invention, it is possible to allow the compression amount of the elastic member to be correctly adjusted when the valve mechanism is assembled, thereby allowing the valve mechanism to stabilize the damping force.

### BRIEF DESCRIPTION OF DRAWINGS

Fig. 1 is a vertical cross-sectional view illustrating a shock absorber according to a first embodiment of the present invention.
Fig. 2 is a vertical cross-sectional view illustrating a part of a piston rod and a piston, and a compression-side valve mechanism in Fig. 1 in an enlarged manner.
Fig. 3 is a vertical cross-sectional view of the valve mechanism in a valve-opened state as viewed from a position similar to Fig. 2.
Fig. 4 is a front view illustrating a valve pin alone.
Fig. 5 is a horizontal cross-sectional view of the valve pin as viewed from a V-V direction in Fig. 4.
Fig. 6 is a vertical cross-sectional view illustrating the valve mechanism in a state sub-assembled into a valve block.
Fig. 7 is a vertical cross-sectional view of a valve mechanism according to a second embodiment as viewed from a position similar to Fig. 2 together with the piston rod, the piston, and the like.

### DESCRIPTION OF EMBODIMENTS

In the following description, a shock absorber according to embodiments of the present invention will be described in detail with reference to the accompanying drawings based on an example in which the shock absorber is applied to a hydraulic shock absorber used for a railway train or the like.

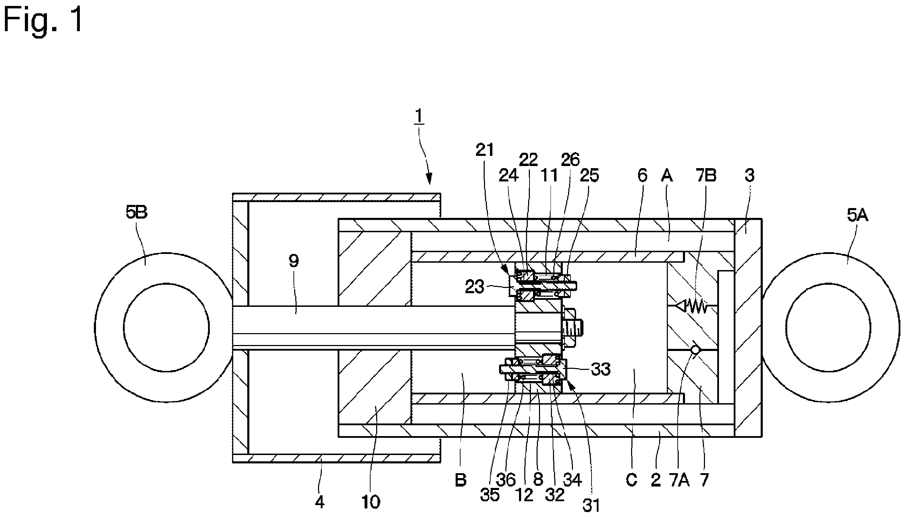

Figs. 1 to 6 illustrate a first embodiment of the present invention. In Fig. 1, a hydraulic shock absorber 1 according to the first embodiment is intended to be mounted in a state horizontally placed between, for example, a vehicle body and a bogie (both are not illustrated) of a railway train. This hydraulic shock absorber 1 includes an inner cylinder 6, a piston 8, a piston rod 9, flow passages 11 and 12, and valve mechanisms 21 and 31, which will be described below.

Now, in the first embodiment, since being disposed in the horizontally placed state, the hydraulic shock absorber 1 will be described illustrating a protrusion side and a bottom cap 3 side of the piston rod 9 on a left side and a right side in Fig. 1, respectively. The layout and configuration of the hydraulic shock absorber 1 indicate one example among a large number of possible layouts and configurations, and the hydraulic shock absorber 1 can also be vertically placed or obliquely placed without being limited to the horizontally placed state illustrated in Fig. 1.

An outer cylinder 2 of the hydraulic shock absorber 1 is positioned on an outer peripheral side of the inner cylinder 6 and provided coaxially with the inner cylinder 6. A right end of the outer cylinder 2 is closed by a bottom cap 3, and a left side thereof is closed by a rod guide 10, which will be described below. A cylindrical cover 4 is arranged on the left side of the outer cylinder 2. The cylindrical cover 4 covers the piston rod 9, which will be described below. Now, mounting eyes 5A and 5B are provided to the bottom cap 3 and the cylindrical cover 4, respectively. The mounting eyes 5A and 5B are attached to, for example, the vehicle body and the bogie of the railway train.

The inner cylinder 6 forming a cylinder is provided coaxially inside the outer cylinder 2. A right end side of the inner cylinder 6 is fitted to a bottom valve 7, and is fixed to the bottom cap 3 via the bottom valve 7. A left end side of the inner cylinder 6 is attached by being fitted to the rod guide 10. Hydraulic oil as hydraulic fluid is sealingly contained in the inner cylinder 6. Not only the hydraulic oil but also, for example, water mixed with an additive therein can be used as the hydraulic fluid.

An annular reservoir chamber A is defined between the inner cylinder 6 and the outer cylinder 2. Gas is sealingly contained in the reservoir chamber A together with the hydraulic oil. This gas may be air in an atmospheric pressure state, or gas such as compressed nitrogen gas may be used as it. At the time of compression (a compression stroke) of the piston rod 9, the gas in the reservoir chamber A is supposed to be compressed so as to compensate for a volume corresponding to an entry of the piston rod 9.

The bottom valve 7 is positioned on the right end side of the inner cylinder 6, and is provided between the bottom cap 3 and the inner cylinder 6. An intake valve 7A is provided at the bottom valve 7. The intake valve 7A functions as a check valve that permits a flow of the hydraulic oil in the reservoir chamber A toward a bottom-side oil chamber C in the inner cylinder 6 and prohibits a flow in an opposite direction therefrom. Further, a relief valve 7B is provided at the bottom valve 7. The relief valve 7B releases the hydraulic oil in the bottom-side oil chamber C to the reservoir chamber A side by being opened when a pressure in the bottom-side oil chamber C reaches or exceeds a setting pressure.

Now, the intake valve 7A is opened/closed so as to always maintain the inside of the inner cylinder 6 in a state filled with the hydraulic oil when the piston 8 is slidably displaced to a rod extension side (the left side) in the inner cylinder 6. In other words, when the piston 8 is slidably displaced in a direction toward a rod-side oil chamber B in the inner cylinder 6 during an extension stroke of the piston rod 9, the intake valve 7A is opened and the hydraulic oil in the reservoir chamber A is introduced or suck into the bottom-side oil chamber C.

The relief valve 7B is opened/closed to release the hydraulic oil in the inner cylinder 6 when the piston 8 is slidably displaced to the right side in the inner cylinder 6. In other words, when the piston 8 is slidably displaced in a direction toward the bottom-side oil chamber C in the inner cylinder 6 during the compression stroke of the piston rod 9, the relief valve 7B is opened and the hydraulic oil in the bottom-side oil chamber C is transmitted out or discharged into the reservoir chamber A.

The piston 8 is a movable partition wall axially slidably inserted (slidably fitted) in the inner cylinder 6. This piston 8 divides (defines) the inside of the inner cylinder 6 into two pressure chambers, i.e., the rod-side oil chamber B as a rod-side fluid chamber and a bottom-side oil chamber C as an opposite rod-side fluid chamber. The piston 8 is formed into a thick cylindrical member, and includes the flow passages 11 and 12, which will be described below, at radially intermediate positions thereof.

The piston rod 9 is coupled at a proximal end side thereof entering the inner cylinder 6 with an axially central position of the piston 8. On the other hand, a distal end side (the protrusion end side) of the piston rod 9 extends out of the inner cylinder 6 via the rod guide 10 and the like. Due to this configuration, the distal end side of the piston rod 9 protrudes axially extendably and compressibly, and is attached to, for example, the bogie of the railway train via the mounting eye 5B.

The rod guide 10 is positioned on the left end sides of the outer cylinder 2 and the inner cylinder 6, and is cylindrically formed. The rod guide 10 positions a left-side portion of the inner cylinder 6 at a center of the outer cylinder 2, and also axially slidably guides (leads) the piston rod 9 on an inner peripheral side thereof.

The compression-side flow passage 11 is configured in such a manner that a flow of the hydraulic oil is generated between the rod-side oil chamber B and the bottom-side oil chamber C when the piston rod 9 is compressed, and is provided while circularly penetrating in an axial direction of the piston 8. A compression-side valve mechanism 21 is provided in the flow passage 11. The compression-side valve mechanism 21 generates a damping force at the time of the compression of the piston rod 9. The flow passage 11 has an inner diameter dimension that allows the valve mechanism 21 to be contained therein. A female screw portion 11B is formed from an axially intermediate portion to the rod-side oil chamber B side (the left side) of an inner peripheral surface 11A of the flow passage 11. A valve seat member 22, which will be described below, is threadably attached to the female screw portion 11B. The valve seat member 22 forms the compression-side valve mechanism 21. A stepped potion 11C is formed at a boundary portion between the inner peripheral surface 11A and the female screw portion 11B. This stepped portion 11C can axially position the valve seat member 22 by abutting against a spring abutment surface 22D of the valve seat member 22.

On the other hand, the extension-side flow passage 12 is provided at a different position from the compression-side flow passage 11 while circularly penetrating in the axial direction of the piston 8. The flow passage 12 is configured in such a manner that a flow of the hydraulic oil is generated between the rod-side oil chamber B and the bottom-side oil chamber C when the piston rod 9 is extended. An extension-side valve mechanism 31 is provided in the extension-side flow passage 12. The extension-side valve mechanism 31 generates a damping force at the time of the extension of the piston rod 9. The flow passage 12 has an inner diameter dimension that allows the valve mechanism 31 to be contained therein and includes an inner peripheral surface, a female screw portion, and a stepped portion, similarly to the compressions-side flow passage 11.

Next, configurations, manufacturing methods, and functions of the poppet valve mechanisms 21 and 31, which constitute characteristic portions of the first embodiment, will be described.

Now, the compression-side valve mechanism 21 and the extension-side valve mechanism 31 are provided at the piston 8. These compression-side valve mechanism 21 and extension-side valve mechanism 31 are basically similarly configured except that they are mounted on the piston 8 in axially opposite orientations from each other.

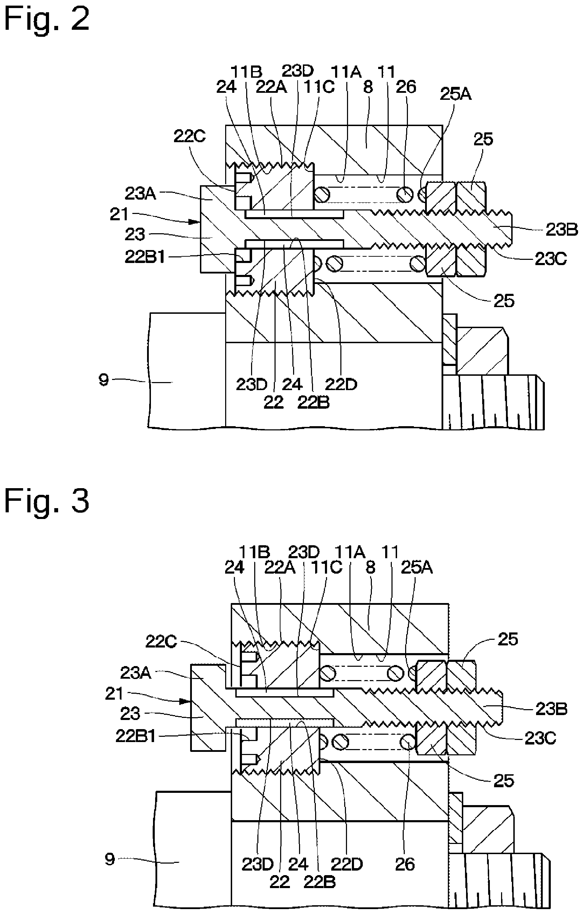

As illustrated in Figs. 2 and 3, the compression-side valve mechanism 21 is provided in the compression-side flow passage 11 of the piston 8. This compression-side valve mechanism 21 is closed to block the flow passage 11 at the time of the extension of the piston rod 9. On the other hand, the valve mechanism 21 adjusts a flow amount of the hydraulic oil passing through inside the flow passage 11 according to the movement of the piston 8, thereby generating the damping force, at the time of the compression of the piston rod 9. In other words, the valve mechanism 21 is configured as a pressure adjustment valve that is opened by receiving a predetermined pressure and is lifted with an opening area (a valve lift) varying according to a movement speed of the piston 8.

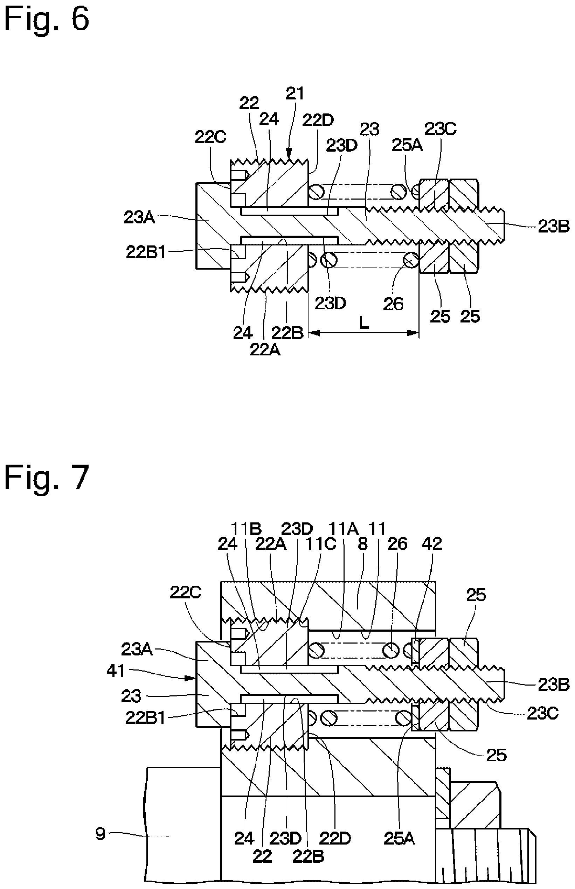

The valve mechanism 21 includes the valve seat member 22, a valve pin 23, passages 24, nuts 25, and a spring member 26, which will be described below. In this case, the valve mechanism 21 can be constructed as one valve block by assembling the valve seat member 22, the valve pin 23, the nuts 25, and the spring member 26, as illustrated in Fig. 6. This valve block can be assembled (sub-assembled) at another location in advance, and is mounted in the flow passage 11 via the valve seat member 22 after this assembling. Further, the valve mechanism 21 assembled as the valve block allows the spring member 26 to be visually confirmed, thereby facilitating measurement of an installation length dimension L of the spring member 26.

The valve seat member 22 is inserted at an intermediate position of the compression-side flow passage 11, and is fixably provided. More specifically, the valve seat member 22 is arranged so as to be located closer to the rod-side oil chamber B on an inner peripheral side of the flow passage 11. The valve seat member 22 is formed into a thick cylindrical shape, and an outer peripheral surface thereof is formed into a male screw portion 22A threadably engaged with the female screw portion 11B of the flow passage 11. Due to this configuration, the valve seat member 22 is detachably attached to the flow passage 11.

On the other hand, a through-hole 22B is provided at a central portion of the valve seat member 22 in an axially penetrating manner. This through-hole 22B is formed as a small-diameter hole that axially movably guides a small-diameter portion 23B of the valve pin 23. An enlarged portion 22B1, which is enlarged in a stepwise manner, is provided on a left end side that corresponds to one end side of the through-hole 22B. This enlarged portion 22B1 functions to cause the pressure in the bottom-side oil chamber C to be applied to the large-diameter portion 23A of the valve pin 23 when the valve pin 23 is closed.

A portion of a left end surface of the valve seat member 22 that is located around the enlarged portion 22B1 of the through-hole 22B serves as an annular valve seat 22C. This valve seat 22C forms a seat surface which the large-diameter portion 23A is seated on and separated from. The large diameter portion 23A works as a valve body of the valve pin 23. Further, a surface of the valve seat member 22 that faces the nuts 25, which will be described below, forms a spring abutment surface 22D. The spring member 26, which will be described below, abuts against the spring abutment surface 22D. Then, the valve seat member 22 is positioned at a predetermined axial position in the flow passage 11 by the threaded engagement of the male screw portion 22A with the female screw portion 11B of the flow passage 11 and abutment of an outer peripheral side of the spring abutment surface 22D with the stepped portion 11C.

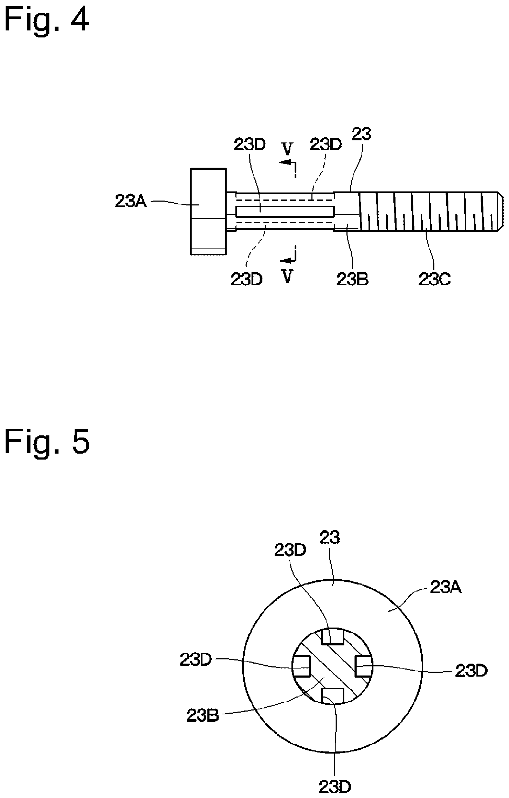

The valve pin 23 is provided while being inserted through the through-hole 22B of the valve seat member 22. As illustrated in Figs. 4 and 6, the valve pin 23 includes the large-diameter portion 23A and the small-diameter portion 23B. The large-diameter portion 23A serves as a disk-shaped valve body that abuts the valve seat 22C of the valve seat member 22. The small-diameter portion 23B has one side (a left side) connected to the large-diameter portion 23A and the other side (a right side) inserted through the through-hole 22B located on an inner peripheral side of the valve seat member 22.

The male screw portion 23C is formed at the other-side portion of the small-diameter portion 23B of the valve pin 23. A portion between this male screw portion 23C and the large-diameter portion 23A serves as a sliding contact surface in a sliding contact with the through-hole 22B of the valve seat member 22, and a plurality of cutout grooves 23D is provided at this portion at intervals in a circumferential direction. For example, as illustrated in Fig. 5, four cutout grooves 23D are provided so as to axially extend at intervals of approximately 90 degrees. Now, a length dimension of each of the cutout grooves 23D is set to a dimension that allows them to protrude to both axial sides beyond the through-hole 22B regardless of a position when the valve pin 23 is axially displaced.

The passages 24 are formed between the through-hole 22B of the valve seat member 22 and an outer periphery of the valve pin 23. In other words, the passages 24 are formed as four communication passages defined between the through-hole 22B of the valve seat member 22 and the individual cutout grooves 23D of the valve pin 23. Due to this configuration, each of the passages 24 is closed by the large-diameter portion 23A when the valve pin 23 is closed. On the other hand, each of the passages 24 allows the hydraulic oil to flow from the bottom-side oil chamber C to the rod-side oil chamber B when the valve pin 23 is opened.

The nuts 25 are configured to be threadably engaged with the male screw portion 23C provided on the small-diameter portion 23B of the valve pin 23. These nuts 25 are arranged as double nuts bringing about an effect of preventing loosening by continuous fastening of two nuts to the male screw portion 23C. Further, a surface of the two nuts 25 that faces the valve seat member 22 serves as a spring abutment surface 25A. The spring member 26, which will be described below, abuts against the spring abutment surface 25A. Further, a part of one of the two nuts 25 that is located on the valve seat member 22 side is disposed in the flow passage 11. Due to this configuration, the valve mechanism 21 can be compactly mounted on the piston 8. Further, this configuration also allows the nuts 25 to be prevented from rotating in the flow passage 11.

The spring member 26 is employed to form an elastic member of the valve mechanism 21. This spring member 26 is disposed between the spring abutment surface 22D of the valve seat member 22 and the spring abutment surface 25A of the nut 25 on the valve seat member 22 side. The spring member 26 is formed by, for example, a compressed coil spring, and constantly biases the valve pin 23 in a direction causing the large-diameter portion 23A thereof to abut against (closely contact) the valve seat 22C of the valve seat member 22.

Then, the spring member 26 can adjust a valve-opening load of the large diameter portion 23A of the valve pin 23 by a change in the installation length dimension L when being installed on the valve mechanism 21. In other words, a damping force by the valve mechanism 21 is adjusted with use of a compression amount (an installation compression load) when the spring member 26 is installed. Therefore, the damping force by the valve mechanism 21 can be stabilized by adjusting the installation length direction L of the spring member 26 to a constant value.

Next, a method for manufacturing the compression-side valve mechanism 21 will be described. First, in a process of assembling the valve mechanism 21 as the valve block, the small-diameter portion 23B of the valve pin 23 is inserted through the through-hole 22B of the valve seat member 22. In this state, the spring member 26 is disposed on an outer peripheral side of the small-diameter portion 23B, and each of the nuts 25 is threadably engaged with the male screw portion 23C of the valve pin 23. Due to this process, as illustrated in Fig. 6, the compression-side valve mechanism 21 can be assembled as the valve block separately from an assembling line of the hydraulic shock absorber 1.

Then, after the compression-side valve mechanism 21 is assembled, the manufacturing method proceeds to a process of adjusting the installation length dimension L of the spring member 26. This adjustment process includes adjusting a position at which each of the nuts 25 is fastened to the male screw portion 23C of the valve pin 23. This process realizes the adjustment of the installation length dimension L of the spring member 26, i.e., the valve-opening load of the large-diameter portion 23A of the valve pin 23. The installation length dimension L of the spring member 26 can be visually confirmed at the time of this adjustment work, and therefore can be easily and correctly adjusted.

Further, after the compression-side valve mechanism 21 is assembled as the valve block, the manufacturing method proceeds to a process of mounting this valve mechanism 21 into the flow passage 11. In this process of mounting the valve mechanism 21, the valve mechanism 21 is inserted from the left side thereof (the rod-side oil chamber B side) into the compression-side flow passage 11 provided on the piston 8, and the male screw portion 22A of the valve seat member 22 is threadably engaged with the female screw portion 11B of the flow passage 11. At this time, the valve mechanism 21 can be mounted at an axially predetermined position relative to the flow passage 11 by the abutment of the spring abutment surface 22D of the valve seat member 22 with the stepped portion 11C of the flow passage 11.

The extension-side valve mechanism 31 is configured as a block body including similar components to the valve seat member 22, the valve pin 23, the passages 24, the nuts 25, and the spring member 26 of the compression-side valve mechanism 21, i.e., a valve seat member 32, a valve pin 33, passages 34, nuts 35, and a spring member 36. Therefore, the extension-side valve mechanism 31 is similarly configured to the compression-side valve mechanism 21 except that it is disposed in a horizontally opposite orientation from the compression-side valve mechanism 21, and therefore descriptions of a configuration, a detailed manufacturing method, and the like thereof will be omitted herein.

Regarding the extension-side valve mechanism 31, after the valve seat member 32, the valve pin 33, the passages 34, each of the nuts 35, and the spring member 36 are assembled in a process of assembling the valve block, the installation length dimension of the spring member 36 is adjusted with use of each of the nuts 35 in a process of adjusting the installation length dimension of the spring member 36. Further, in a process of mounting the valve mechanism 31 into the flow passage 12, the valve mechanism 31 can be mounted in the flow passage 12 by inserting the valve mechanism 31 from the right side (the bottom-side oil chamber C side) with respect to the extension-side flow passage 12 provided on the piston 8 and threadably engaging the valve seat member 32 with the flow passage 12.

The hydraulic shock absorber 1 according to the first embodiment is configured in the above-described manner, and an operation thereof will be described next.

The hydraulic shock absorber 1 is mounted in such a manner that the mounting eye 5A provided on the bottom cap 3 positioned on the right end side is attached to, for example, the vehicle body of the railway train. On the other hand, the mounting eye 5B on the protrusion end side of the piston rod 9 is attached to, for example, the bogie of the railway train. As a result, the piston rod 9 is axially compressed into the inner cylinder 6 and axially extended from the inner cylinder 6, by which the hydraulic shock absorber 1 can absorb a vibration of the railway train so as to damp it.

More specifically, when the piston rod 9 is in the compression stroke, the piston 8 is slidably displaced toward the bottom valve 7 side. This displacement brings the inside of the bottom-side oil chamber C into a high-pressure state, thereby causing the compression-side valve mechanism 21 provided in the flow passage 11 of the piston 8 to open the valve pin 23 against the spring member 26, and causing the hydraulic oil in the bottom-side oil chamber C to flow into the rod-side oil chamber B via each of the passages 24. At this time, a biasing force exerted by the spring member 26 applies resistance against the hydraulic oil flowing in each of the passages 24, by which the hydraulic shock absorber 1 can absorb the compression movement of the piston rod 9 so as to reduce it.

During this compression stroke, the relief valve 7B of the bottom valve 7 is opened by receiving the pressure in the bottom-side oil chamber C, and causes the hydraulic oil in the bottom-side oil chamber C to flow out toward the reservoir chamber A side by an amount corresponding to a volume of the piston rod 9 that enters the cylinder. At this time, the relief valve 7B is biased in a valve-closing direction, and therefore the hydraulic shock absorber 1 can also generate the damping force due to the biasing force thereof.

On the other hand, the piston 8 is slidably displaced toward the rod guide 10 side when the piston rod 9 is in the extension stroke. This displacement brings the inside of the rod-side oil chamber B into a high-pressure state, so that the extension-side valve mechanism 31 provided in the flow passage 12 of the piston 8 is opened to cause the hydraulic oil in the rod-side oil chamber B to flow into the bottom-side oil chamber C via each of the passages 34. At this time, a biasing force exerted by the spring member 36 applies resistance against the hydraulic oil, by which the hydraulic shock absorber 1 can absorb the extension movement of the piston rod 9 so as to reduce it.

Therefore, according to the first embodiment, the compression-side valve mechanism 21 is configured as the valve block including the annular valve seat member 22 fixably provided by being inserted at the intermediate position of the compression-side flow passage 11. The valve seat member 22 has the one end side serving as the valve seat 22C. The valve seat member 22 includes the through-hole 22B at the central portion thereof. The valve block further includes the valve pin 23 including the large-diameter portion 23A and the small-diameter portion 23B. The large-diameter portion 23A forms the valve body by abutting against the valve seat 22C. The small-diameter portion 23B has the one side connected to this large-diameter portion 23A and the other side inserted on the inner peripheral side of the valve seat member 22. The valve block further includes each of the passages 24 formed between the through-hole 22B of the valve seat member 22 and the outer periphery of the valve pin 23 and configured to be opened/closed according to the movement of the valve pin 23, each of the nuts 25 threadably engaged with the outer periphery of the other side of the small-diameter portion 23B of the valve pin 23, and the spring member 26 disposed between the other end side of the valve seat member 22 and the nuts 25. While being configured in this manner, the valve mechanism 21 configured as the valve block is detachably mounted in the flow passage 11 via the valve seat member 22. Further, the extension-side valve mechanism 31 is also configured as the valve block and detachably attached in the flow passage 12, similarly to the compression-side valve mechanism 21.

Therefore, the compression-side valve mechanism 21 can change the installation length dimension of L of the spring member 26 by the fastening or the loosening of each of the nuts 25 in the state as the valve block before being mounted on the hydraulic shock absorber 1. In addition, the compression-side valve mechanism 21 allows the spring member 26 to be easily visually confirmed, thereby facilitating the measurement of the installation length dimension L.

As a result, the compression-side valve mechanism 21 allows a compression amount of the spring member 26 to be correctly adjusted when being assembled, and therefore can stabilize the damping force generated thereby. Similarly, the extension-side valve mechanism 31 can stabilize the damping force generated thereby.

Further, the damping force can be easily changed by preparing valve mechanisms including spring members compressed by different amounts as the individual valve mechanisms 21 and 31, and attaching them to the flow passages 11 and 12 of the piston 8, respectively. In addition, the piston 8 can be used as a shared part among a plurality of types of hydraulic shock absorbers.

The flow passages 11 and 12 are provided at the piston 8. With the flow passages 11 and 12 provided in this manner, the part of the one of the two nuts 25 that is located on the valve seat member 22 side is disposed in the flow passage 11. Further, the part of the one of the two nuts 35 that is located on the valve seat member 32 side is disposed in the flow passage 12. Due to this configuration, the valve mechanisms 21 and 31 can be compactly mounted on the piston 8. In addition, in a case where the flow passage 11 and the nuts 25 are shaped in such a manner that they are engaged with each other in the circumferential direction, this configuration also allows the nuts 25 to be prevented from rotating in the flow passage 11.

The male screw portion 22A is formed on the outer peripheral side of the valve seat member 22, and the female screw portion 11B is formed on the compression-side flow passage 11. Further, the male screw portion is formed on the outer peripheral side of the valve seat member 32, and the female screw portion is formed on the extension-side flow passage 12. Therefore, the valve seat members 22 and 32 can be easily attached and detached only by threadably engaging the valve seat members 22 and 32 with the flow passages 11 and 12, respectively.

Since the flow passages 11 and 12 are circularly formed, the valve mechanisms 21 and 31 can be attached freely in the circumferential direction with respect to the flow passages 11 and 12 when being mounted in the flow passages 11 and 12, respectively, thereby improving assembling work efficiency.

Further, each of the passages 24 of the compression-side valve mechanism 21 is configured to be opened and closed by the large-diameter portion 23A of the valve pin 23. Further, each of the passages 34 of the extension-side valve mechanism 31 is configured to be opened and closed by the large-diameter portion of the valve pin 33. The valve body can be provided at a part of each of the valve pins 23 and 33, so that the configuration can be simplified.

Next, Fig. 7 illustrates a second embodiment of the present invention. The present embodiment is characterized in that the nut is provided with a washer for adjusting the length of the elastic member. The second embodiment will be described, identifying similar components to the above-described first embodiment by the same reference numerals and omitting descriptions thereof. Further, the second embodiment will be described, focusing on the compression-side valve mechanism and omitting a description of the extension-side valve mechanism configured basically similarly to the compression-side valve mechanism.

In Fig. 7, a compression-side valve mechanism 41 according to the second embodiment is configured as one valve block including the valve seat member 22, the valve pin 23, the passages 24, the nuts 25, and the spring member 26, approximately similarly to the compressions-side valve mechanism 21 according to the first embodiment. However, the compression-side valve mechanism 41 according to the second embodiment is different from the compression-side valve mechanism 21 according to the first embodiment in terms of provision of a washer 42, which will be described below, between the nut 25 and the spring member 26.

The washer 42 is positioned on the outer peripheral side of the small-diameter potion 23B of the valve pin 23 and provided between the spring abutment surface 25A of the nut 25 and the spring member 26. This washer 42 is used to adjust the length (the installation length dimension) of the spring member 26. In other words, the washer 42 can be used to adjust the installation length dimension of the spring member 26 by using a plurality of types of washers having different thickness dimensions while replacing them as appropriate or changing the number of stacked washers as appropriate.

In this manner, the thus-configured second embodiment can also acquire approximately similar advantageous effects to the above-described first embodiment. Especially, according to the second embodiment, the compression-side valve mechanism 41 allows the compression amount of the spring member 26 to be adjusted with use of the washer 42, and therefore can stabilize the damping force generated thereby.

In the second embodiment, the hydraulic shock absorber has been described assuming that the washer 42 is provided between the nut 25 and the spring member 26 by way of example. However, the present invention is not limited thereto, and the hydraulic shock absorber may be configured in such a manner that the washer 42 is provided between the spring abutment surface 22D of the valve seat member 22 and the spring member 26.

In the first embodiment, the hydraulic shock absorber 1 has been described assuming that the flow passages 11 and 12 are provided at the piston 8, the compression-side valve mechanism 21 is provided in the flow passage 11, and the extension-side valve mechanism 31 is provided in the flow passage 12 by way of example. However, the present invention is not limited thereto, and the hydraulic shock absorber 1 may be configured in such a manner that the flow passage is provided to, for example, the bottom valve 7, the rod guide 10, or the like, and the valve mechanism is provided in this flow passage. This configuration shall also be applicable to the second embodiment in a similar manner.

In the first embodiment, the spring members 26 and 36 formed by the compression springs have been described as the elastic member by way of example. However, the present invention is not limited thereto, and the hydraulic shock absorber 1 may be configured to use, for example, a disk spring or a rubber spring as the elastic member. This configuration shall also be applicable to the second embodiment in a similar manner.

In each of the embodiments, the hydraulic shock absorber has been described assuming that it is mounted on the railway train by way of example. However, the present invention is not limited thereto, and can also be applied to various kinds of shock absorbers that absorb a shock on an object where the shock should be absorbed, such as a shock absorber for use in a four-wheeled automobile and a two-wheeled vehicle, a shock absorber for use in various kinds of equipment and machinery including general industrial machinery, and a shock absorber for use in a building

Possible configurations as the shock absorber according to the above-described embodiments include the following examples.

A first configuration of the shock absorber includes a cylinder sealingly containing hydraulic fluid therein, a piston inserted in the cylinder and dividing an inside of the cylinder into a rod-side fluid chamber and an opposite rod-side fluid chamber, a piston rod coupled with the piston and extending out of the cylinder, a flow passage configured in such a manner that a flow of the hydraulic fluid is generated due to extension and compression of the piston rod, and a valve mechanism provided in the flow passage and configured to generate a damping force. The valve mechanism includes an annular valve seat member fixably provided by being inserted at an intermediate position of the flow passage. The valve seat member has one end side serving as a valve seat. The valve seat member includes a through-hole at a central portion thereof. The valve mechanism further includes a valve pin including a large-diameter portion and a small-diameter portion. The large-diameter portion forms a valve body by abutting against the valve seat. The small-diameter portion has one side connected to this large-diameter portion and the other side inserted on an inner peripheral side of the valve seat member. The valve mechanism further includes a passage formed between the through-hole of the valve seat member and an outer periphery of the valve pin and configured to be opened/closed according to a movement of the valve pin, a nut threadably engaged with an outer periphery of the other side of the small-diameter portion of the valve pin, and an elastic member disposed between the other end side of the valve seat member and the nut.

As a second configuration, in the first configuration, the flow passage is provided at the piston, and at least a part of the nut is disposed in the flow passage.

As a third configuration, in any of the first and second configurations, a male screw portion is formed on an outer peripheral side of the valve seat member, and a female screw portion is formed in the flow passage.

As a fourth configuration, in any of the first to third configurations, the flow passage is circular.

As a fifth configuration, in any of the first to fourth configurations, the passage is opened/closed by the large-diameter portion of the valve pin.

As a sixth configuration, in any of the first to fifth configurations, a washer for adjusting a length of the elastic member is provided on the other end side of the valve seat member or the nut.

A seventh configuration is a method for manufacturing a shock absorber. The shock absorber includes a cylinder sealingly containing hydraulic fluid therein, a piston inserted in the cylinder and dividing an inside of the cylinder into a rod-side fluid chamber and an opposite rod-side fluid chamber, a piston rod coupled with the piston and extending out of the cylinder, a flow passage configured in such a manner that a flow of the hydraulic fluid is generated due to extension and compression of the piston rod, and a valve mechanism provided in the flow passage and configured to generate a damping force. The valve mechanism is configured as a valve block including an annular valve seat member fixably provided by being inserted at an intermediate position of the flow passage. The valve seat member has one end side serving as a valve seat. The valve seat member includes a through-hole at a central portion thereof. The valve block further includes a valve pin including a large-diameter portion and a small-diameter portion. The large-diameter portion forms a valve body by abutting against the valve seat. The small-diameter portion has one side connected to this large-diameter portion and the other side inserted on an inner peripheral side of the valve seat member. The valve block further includes a passage formed between the through-hole of the valve seat member and an outer periphery of the valve pin and configured to be opened/closed according to a movement of the valve pin, a nut threadably engaged with an outer periphery of the other side of the small-diameter portion of the valve pin, and an elastic member disposed between the other end side of the valve seat member and the nut. The method for manufacturing the shock absorber includes assembling the valve block, and adjusting an installment length dimension of the elastic member after the valve block is assembled.

As an eighth configuration, in the seventh configuration, the flow passage is provided at the piston. The manufacturing method further includes mounting the assembled valve block into the flow passage.

Having described merely several embodiments of the present invention, it is apparent to those skilled in the art that the embodiments described as the examples can be modified or improved in various manners without substantially departing from the novel teachings and advantages of the present invention. Therefore, such a modified or improved embodiment is intended to be also contained in the technical scope of the present invention. The above-described embodiments may also be arbitrarily combined.

The present application claims priority under the Paris Convention to Japanese Patent Application No. 2016-125558 filed on June 24, 2017.

### REFERENCE SIGN LIST

- 1: hydraulic shock absorber (shock absorber)

- 6: inner cylinder (cylinder)
- 8: piston
- 9: piston rod
- 11: compression-side flow passage
- 11B: female screw portion
- 12: extension-side flow passage
- 21, 41: compression-side valve mechanism (valve block)
- 22, 32: valve seat member
- 22A, 23C: male screw portion
- 22B: through-hole
- 22C: valve seat
- 22, 33: valve pin
- 23A: large-diameter portion (valve body)
- 23B: small-diameter portion
- 23D: cutout groove
- 24, 34: passage
- 25, 35: nut
- 26, 36: spring member (elastic member)
- 31: extension-side valve mechanism (valve block)
- 42: washer
- L: installation length dimension.

## Claims

1. A shock absorber comprising:
a cylinder (6) sealingly containing hydraulic fluid therein;
a piston (8) inserted in the cylinder (6) and dividing an inside of the cylinder (6) into a rod-side fluid chamber (B) and an opposite rod-side fluid chamber (C);
a piston rod (9) coupled with the piston (8) and extending out of the cylinder (6);
a flow passage (11, 12) configured in such a manner that a flow of the hydraulic fluid is generated due to extension and compression of the piston rod (9); and
a valve mechanism (21, 31) provided in the flow passage (11, 12) and configured to generate a damping force,
wherein the valve mechanism (21, 31) includes
an annular valve seat member (22) fixably provided by being inserted at an intermediate position of the flow passage (11, 12), the valve seat member having one end side serving as a valve seat (22C), the valve seat member (22) including a through-hole (22B) at a central portion thereof,
a valve pin (23) including a large-diameter portion (23A) and a small-diameter portion (23B), the large-diameter portion (23A) forming a valve body by abutting against the valve seat (22C), the small-diameter portion (23B) having one side connected to the large-diameter portion (23A) and the other side inserted on an inner peripheral side of the valve seat member (22),
a passage (24) formed between the through-hole (22B) of the valve seat member (22) and an outer periphery of the valve pin (23) and configured to be opened/closed according to a movement of the valve pin (23), **characterised in that**
a nut (25) is threadably engaged with an outer periphery of the other side of the small-diameter portion (23B) of the valve pin (23), and
an elastic member (26) is disposed between the other end side of the valve seat member (22) and the nut (25),
wherein the flow passage (11, 12) is provided at the piston (8), and at least a part of the nut (25) is disposed in the flow passage (11, 12).

2. The shock absorber according to claim 1, wherein a male screw portion is formed on an outer peripheral side of the valve seat member (22), and a female screw portion is formed in the flow passage (11, 12).

3. The shock absorber according to any one of claims 1 or 2, wherein the flow passage (11, 12) is circular.

4. The shock absorber according to any one of claims 1 to 3, wherein the passage is opened/closed by the large-diameter portion (23A) of the valve pin (23).

5. The shock absorber according to any one of claims 1 to 4, wherein a washer for adjusting a length of the elastic member (26) is provided on the other end side of the valve seat member (22) or the nut (25).

6. A method for manufacturing a shock absorber, the shock absorber including
a cylinder (6) sealingly containing hydraulic fluid therein,
a piston (8) inserted in the cylinder (6) and dividing an inside of the cylinder (6) into a rod-side fluid chamber (B) and an opposite rod-side fluid chamber (C),
a piston rod (9) coupled with the piston (8) and extending out of the cylinder (6),
a flow passage (11, 12) configured in such a manner that a flow of the hydraulic fluid is generated due to extension and compression of the piston rod (9), and
a valve mechanism (21, 31) provided in the flow passage (11, 12) and configured to generate a damping force,
the valve mechanism (21, 31) including
an annular valve seat member (22) fixably provided by being inserted at an intermediate position of the flow passage (11, 12), the valve seat member having one end side serving as a valve seat (22C), the valve seat member (22) including a through-hole (22B) at a central portion thereof,
a valve pin (23) including a large-diameter portion (23A) and a small-diameter portion (23B), the large-diameter portion (23A) forming a valve body by abutting against the valve seat, the small-diameter portion (23B) having one side connected to the large-diameter portion (23A) and the other side inserted on an inner peripheral side of the valve seat member (22),
a passage formed between the through-hole (22B) of the valve seat member (22) and an outer periphery of the valve pin (23) and configured to be opened/closed according to a movement of the valve pin (23), **characterized in that** a nut (25) is threadably engaged with an outer periphery of the other side of the small-diameter portion (23B) of the valve pin (23), and
an elastic member (26) is disposed between the other end side of the valve seat member (22) and the nut (25),
the method for manufacturing the shock absorber comprises the steps of:
assembling the valve mechanism (21, 31) as a valve block; and
adjusting an installment length dimension of the elastic member (26) after the valve block is assembled,
wherein the flow passage (11, 12) is provided at the piston (8),
wherein at least a part of the nut (25) is disposed in the flow passage (11, 12), and
wherein the manufacturing method further includes mounting the assembled valve block into the flow passage (11, 12).

## Patentansprüche

1. Stoßdämpfer, umfassend:
einen Zylinder (6), der abdichtend Hydraulikflüssigkeit darin enthält;
einen Kolben (8), der in den Zylinder (6) eingesetzt ist und ein Inneres des Zylinders (6) in eine stangenseitige Fluidkammer (B) und eine der Stangenseite gegenüberliegende Fluidkammer (C) teilt;
eine Kolbenstange (9), die mit dem Kolben (8) gekoppelt ist und aus dem Zylinder (6) ausfährt;
einen Stromkanal (11, 12), der derart ausgelegt ist, dass ein Strom der Hydraulikflüssigkeit aufgrund des Ausfahrens und der Verdichtung der Kolbenstange (9) erzeugt wird; und
einen Ventilmechanismus (21, 31), der in dem Stromkanal (11, 12) bereitgestellt und zum Erzeugen einer Dämpfungskraft ausgelegt ist,
wobei der Ventilmechanismus (21, 31) einschließt
ein ringförmiges Ventilsitzelement (22), das festlegbar bereitgestellt ist, indem es an einer Zwischenposition des Stromkanals (11, 12) eingesetzt ist, wobei das Ventilsitzelement eine Endseite aufweist, die als ein Ventilsitz (22C) dient, das Ventilsitzelement (22) einschließlich eines Durchgangslochs (22B) an einem Mittelabschnitt davon,
einen Ventilstift (23), einschließlich eines Abschnitts mit großem Durchmesser (23A) und eines Abschnitts mit kleinem Durchmesser (23B), wobei der Abschnitt mit großem Durchmesser (23A) ein Ventilgehäuse bildet, indem er an den Ventilsitz (22C) anstößt, wobei bei dem Abschnitt mit kleinem Durchmesser (23B) eine Seite mit dem Abschnitt mit großem Durchmesser (23A) verbunden ist und die andere Seite an einer Innenumfangsseite des Ventilsitzelements (22) eingesetzt ist,
einen Kanal (24), der zwischen dem Durchgangsloch (22B) des Ventilsitzelements (22) und einem Außenumfang des Ventilstifts (23) gebildet und zum Geöffnet-/Geschlossenwerden gemäß einer Bewegung des Ventilstifts (23) ausgelegt ist, **dadurch gekennzeichnet, dass**
eine Mutter (25) mit einem Außenumfang der anderen Seite des Abschnitts mit kleinem Durchmesser (23B) des Ventilstifts (23) schraubbar in Eingriff steht und
ein elastisches Element (26) zwischen der anderen Endseite des Ventilsitzelements (22) und der Mutter (25) angeordnet ist,
wobei der Stromkanal (11, 12) an dem Kolben (8) bereitgestellt ist und mindestens ein Teil der Mutter (25) in dem Stromkanal (11, 12) angeordnet ist.

2. Stoßdämpfer nach Anspruch 1, wobei ein Schraubenabschnitt mit Außengewinde an einer Außenumfangsseite des Ventilsitzelements (22) gebildet ist und ein Schraubenabschnitt mit Innengewinde in dem Stromkanal (11, 12) gebildet ist.

3. Stoßdämpfer nach einem der Ansprüche 1 oder 2, wobei der Stromkanal (11, 12) kreisförmig ist.

4. Stoßdämpfer nach einem der Ansprüche 1 bis 3, wobei der Kanal durch den Abschnitt mit großem Durchmesser (23A) des Ventilstifts (23) geöffnet/geschlossen wird.

5. Stoßdämpfer nach einem der Ansprüche 1 bis 4, wobei eine Scheibe zum Einstellen einer Länge des elastischen Elements (26) an der anderen Endseite des Ventilsitzelements (22) oder der Mutter (25) bereitgestellt ist.

6. Verfahren zum Herstellen eines Stoßdämpfers, der Stoßdämpfer einschließlich
eines Zylinders (6), der abdichtend Hydraulikflüssigkeit darin enthält,
eines Kolbens (8), der in den Zylinder (6) eingesetzt ist und ein Inneres des Zylinders (6) in eine stangenseitige Fluidkammer (B) und eine der Stangenseite gegenüberliegende Fluidkammer (C) teilt,
einer Kolbenstange (9), die mit dem Kolben (8) gekoppelt ist und aus dem Zylinder (6) ausfährt,
eines Stromkanals (11, 12), der derart ausgelegt ist, dass ein Strom der Hydraulikflüssigkeit aufgrund des Ausfahrens und der Verdichtung der Kolbenstange (9) erzeugt wird, und
eines Ventilmechanismus (21, 31), der in dem Stromkanal (11, 12) bereitgestellt und zum Erzeugen einer Dämpfungskraft ausgelegt ist,
der Ventilmechanismus (21, 31) einschließlich
eines ringförmigen Ventilsitzelements (22), das festlegbar bereitgestellt ist, indem es an einer Zwischenposition des Stromkanals (11, 12) eingesetzt ist, wobei das Ventilsitzelement eine Endseite aufweist, die als ein Ventilsitz (22C) dient, das Ventilsitzelement (22) einschließlich eines Durchgangslochs (22B) an einem Mittelabschnitt davon,
eines Ventilstifts (23), einschließlich eines Abschnitts mit großem Durchmesser (23A) und eines Abschnitts mit kleinem Durchmesser (23B), wobei der Abschnitt mit großem Durchmesser (23A) ein Ventilgehäuse bildet, indem er an den Ventilsitz anstößt, wobei bei dem Abschnitt mit kleinem Durchmesser (23B) eine Seite mit dem Abschnitt mit großem Durchmesser (23A) verbunden ist und die andere Seite an einer Innenumfangsseite des Ventilsitzelements (22) eingesetzt ist,
eines Kanals, der zwischen dem Durchgangsloch (22B) des Ventilsitzelements (22) und einem Außenumfang des Ventilstifts (23) gebildet und zum Geöffnet-/Geschlossenwerden gemäß einer Bewegung des Ventilstifts (23) ausgelegt ist, **dadurch gekennzeichnet dass**
eine Mutter (25) mit einem Außenumfang der anderen Seite des Abschnitts mit kleinem Durchmesser (23B) des Ventilstifts (23) schraubbar in Eingriff steht und
ein elastisches Element (26) zwischen der anderen Endseite des Ventilsitzelements (22) und der Mutter (25) angeordnet ist,
wobei das Verfahren zum Herstellen des Stoßdämpfers die Schritte umfasst:
Zusammenbauen des Ventilmechanismus (21, 31) als einen Ventilblock und
Einstellen einer Installationslängenabmessung des elastischen Elements (26), nachdem der Ventilblock zusammengebaut ist,
wobei der Stromkanal (11, 12) an dem Kolben (8) bereitgestellt ist,
wobei mindestens ein Teil der Mutter (25) in dem Stromkanal (11, 12) angeordnet ist und
wobei das Herstellungsverfahren weiter ein Montieren des zusammengebauten Ventilblocks in den Stromkanal (11, 12) einschließt.

## Revendications

1. Amortisseur comprenant :
un cylindre (6) contenant de manière étanche en son sein du fluide hydraulique ;
un piston (8) inséré dans le cylindre (6) et divisant un intérieur du cylindre (6) en une chambre de fluide côté tige (B) et en une chambre de fluide côté opposé à la tige (C) ;
une tige de piston (9) couplée avec le piston (8) et s'étendant hors du cylindre (6) ;
un passage de flux (11, 12) configuré de telle sorte qu'un flux du fluide hydraulique est produit en raison de l'extension et de la compression de la tige de piston (9) ; et
un mécanisme de soupape (21, 31) disposé dans le passage de flux (11, 12) et configuré pour produire une force d'amortissement,
dans lequel le mécanisme de soupape (21, 31) inclut
un élément annulaire formant siège de soupape (22) disposé de manière fixe en étant inséré à une position intermédiaire du passage de flux (11, 12), l'élément formant siège de soupape présentant un côté d'extrémité servant de siège de soupape (22C), l'élément formant siège de soupape (22) incluant un trou traversant (22B) au niveau d'une portion centrale de ce dernier,
un pointeau de soupape (23) incluant une portion de grand diamètre (23A) et une portion de petit diamètre (23B), la portion de grand diamètre (23A) formant un corps de soupape en butant contre le siège de soupape (22C), la portion de petit diamètre (23B) présentant un côté relié à la portion de grand diamètre (23A) et l'autre côté inséré sur un côté périphérique intérieur de l'élément formant siège de soupape (22),
un passage (24) formé entre le trou traversant (22B) de l'élément formant siège de soupape (22) et une périphérie extérieure du pointeau de soupape (23) et configuré pour être ouvert/fermé selon un mouvement du pointeau de soupape (23),
**caractérisé en ce que**
un écrou (25) est en prise par filetage avec une périphérie extérieure de l'autre côté de la portion de petit diamètre (23B) du pointeau de soupape (23), et
un élément élastique (26) est disposé entre l'autre côté d'extrémité de l'élément formant siège de soupape (22) et l'écrou (25),
dans lequel le passage de flux (11, 12) est disposé au niveau du piston (8), et au moins une partie de l'écrou (25) est disposée dans le passage de flux (11, 12).

2. Amortisseur selon la revendication 1, dans lequel une portion formant vis mâle est formée sur un côté périphérique extérieur de l'élément formant siège de soupape (22) et une portion formant vis femelle est formée dans le passage de flux (11, 12).

3. Amortisseur selon l'une quelconque des revendications 1 ou 2, dans lequel le passage de flux (11, 12) est circulaire.

4. Amortisseur selon l'une quelconque des revendications 1 à 3, dans lequel le passage est ouvert/fermé par la portion de grand diamètre (23A) du pointeau de soupape (23).

5. Amortisseur selon l'une quelconque des revendications 1 à 4, dans lequel une rondelle pour ajuster une longueur de l'élément élastique (26) est disposée sur l'autre côté d'extrémité de l'élément formant siège de soupape (22) ou de l'écrou (25).

6. Procédé pour fabriquer un amortisseur, l'amortisseur incluant
un cylindre (6) contenant de manière étanche en son sein du fluide hydraulique,
un piston (8) inséré dans le cylindre (6) et divisant un intérieur du cylindre (6) en une chambre de fluide côté tige (B) et une chambre de fluide de côté opposé à la tige (C),
une tige de piston (9) couplée au piston (8) et s'étendant hors du cylindre (6),
un passage de flux (11, 12) configuré de telle sorte qu'un flux du fluide hydraulique est produit en raison de l'extension et de la compression de la tige de piston (9), et
un mécanisme de soupape (21, 31) disposé dans le passage de flux (11, 12) et configuré pour produire une force d'amortissement,
le mécanisme de soupape (21, 31) incluant
un élément annulaire formant siège de soupape (22) disposé de manière fixe en étant inséré au niveau d'une position intermédiaire du passage de flux (11, 12), l'élément formant siège de soupape présentant un côté d'extrémité servant de siège de soupape (22C), l'élément formant siège de soupape (22) incluant un trou traversant (22B) au niveau d'une portion centrale de ce dernier,
un pointeau de soupape (23) incluant une portion de grand diamètre (23A) et une portion de petit diamètre (23B), la portion de grand diamètre (23A) formant un corps de soupape en butant contre le siège de soupape, la portion de petit diamètre (23B) présentant un côté relié à la portion de grand diamètre (23A) et l'autre côté inséré sur un côté périphérique intérieur de l'élément formant siège de soupape (22),
un passage formé entre le trou traversant (22B) de l'élément formant siège de soupape (22) et une périphérie extérieure du pointeau de soupape (23) et configuré pour être ouvert/fermé selon un mouvement du pointeau de soupape (23),
**caractérisé en ce que**
un écrou (25) est en prise par filetage avec une périphérie extérieure de l'autre côté de la portion de petit diamètre (23B) du pointeau de soupape (23), et
un élément élastique (26) est disposé entre l'autre côté d'extrémité de l'élément formant siège de soupape (22) et l'écrou (25),
le procédé pour fabriquer l'amortisseur comprend les étapes :
d'assemblage du mécanisme de soupape (21, 31) comme un bloc de soupape ; et
d'ajustement d'une dimension de longueur d'installation de l'élément élastique (26) après que le bloc de soupape est assemblé,
dans lequel le passage de flux (11, 12) est disposé au niveau du piston (8),
dans lequel au moins une partie de l'écrou (25) est disposée dans le passage de flux (11, 12), et
dans lequel le procédé de fabrication inclut en outre le montage du bloc de soupape assemblé jusque dans le passage de flux (11, 12).
